# EUROPEAN PATENT SPECIFICATION

(11) **EP 0 768 990 B1**
(45) Date of publication and mention of the grant of the patent: **23.12.1998**
(21) Application number: 95925822.9
(22) Date of filing: 04.07.1995
(51) Int. Cl.: C04B 16/06, C04B 24/24, C04B 28/00

(54) **MDF CEMENT COMPOSITIONS WITH IMPROVED IMPACT STRENGTH**
MACROFEHLERFREIE ZEMENTZUSAMMENSETZUNGEN MIT VERBESSERTER SCHLAGFESTIGKEIT
COMPOSITIONS DE CIMENT EXEMPTES DE MACRODEFAUTS PRESENTANT UNE RESISTANCE AMELIOREE AUX CHOCS

(30) Priority: 06.07.1994 IT MI941407
(43) Date of publication of application: 23.04.1997
(73) Proprietor: ITALCEMENTI S.p.A., 24100 Bergamo (IT)
(72) Inventor: DI MAGGIO, Rosa, I-38100 Trento (IT); FRANCHINI, Marcello, I-38079 Tione di Trento (IT); GUERRINI, Gianluca, I-20063 Cernusco sul Naviglio (IT); MIGLIARESI, Claudio, I-38100 Trento (IT); POLI, Stefano, I-38100 Trento (IT)
(74) Representative: Gervasi, Gemma, Dr.
(86) International application number: PCT/EP95/02586
(87) International publication number: WO 96/01234

(56) References cited:
- EP-A- 0 351 730
- US-A- 4 070 199

## Description

The present invention concerns a cement material containing polymers showing an improved impact strength, meant as an increase in the breaking total energy, by fibers addition.

The so called MDF (macro defect free) cement namely free from macroscopic defects, is a kind of cement well known in the art.

The American Patent US 4.070.199 in fact describes an hydraulic material having a high flexural strength prepared by kneading a mixture of hydraulic cement, water and a soluble (or dispersable in water) polymer using a cylinder mixer.

The product is then pressed and left to harden.

Subsequent Patents (EP 55035 and EP 21682) describe other polymeric materials which can be used in the cement mixture such as the hydroxypropylmethylcellulose or the partially hydrolized polyvinyl acetate.

The use of fibers in MDF cement matrices is well known in the art.

For instance in the Italian Patent No. 1.068.427 is reported the use of inorganic mineral fibers (asbestos fibers), organic or polymeric fibers (polypropylene or nylon). According to such a Patent by an addition of nylon fibers cut in 20 deniers pieces having a constant length equal to 10 mm, the proportional elastic limit of the hardened cement matrix is high, and substiantially equal even when an increasing quantity of fibers to 6% by weight is present.

However it is necessary to emphasize that in the whole known art relating to the MDF products the fibers addition to the cement matrix is never considered in order to modify the fracture behaviour of the composite with a typically pseudo-ductile stress-strain trend. The addition of fibers is instead described in order to increase the mechanical resistance nevertheless preserving a breaking behaviour of fragile kind. For instance, a way to improve the fracture energy of these materials has been reached by the teaching of the Patent EP 114518 by the addition of randomly distributed fibers in the shape of a fibrous "mat" or in a cloth-shaped oriented way .

The achievement of cement materials of this kind even if efficacious in order to produce laminated materials however prevents from producing materials having more complex geometrical shapes, and in any case, it does not modify the behavior of the composite material rather it only increases its impact strength.

In the article "Toughening of MDF Composites" by C.K. Park (Mat. Res. Soc. Symp. Proc. vol. 211, 1991) are reported examples of the use of short carbon, glass or cellulose fibers for particular MDF matrices (comprising fly ashes and microsilica) in order to estimate the impact strength of the materials resulting in the elastic field (K_{IC}).

The problem that the present invention wants to solve is not that of obtaining a composite material with increased mechanical resistance with respect to the base matrix but the achievement of a composite cement material able to support high loads at high strains even after the start of the fracture propagation inside the composite itself. This means to define the achievement of the impact strength of the composites of the invention as the increase of the breaking total energy (the integral of the stress-strain curve) with a modification of the breaking behavior of the material from fragile to pseudo-ductile. Therefore we mean to consider the whole stress-strain curve not limiting to just the part of the curve including the elastic field to the achievement of the maximum load.

By "pseudo-ductile" material in the present description and in the claims is meant a material which stressed by a flexure load shows an improved post fracture impact strength. To even better explain the problem which the invention solves one has to bear in mind that, while a traditional MDF cement matrix yields once stressed by a load having low strain values, the products of the present invention are such that the fibers contained into them preserve the capability to transfer the stress through the fracture by bridge bonds formation and therefore undertake pull out processes with consequent increase of absorbed energy.

By "pull out" we mean the mechanism by which a fiber subjected to a direct or indirect load, pulls out of the matrix in which it is inserted. By the pull out an energy dissipation in the shape of detachment at the fiber-matrix interface (debonding) and of friction due to the fiber pulling out is obtained. It is known in the art that the use of fibers in the traditional cements involves a change of the stress-strain curve obtaining some composite materials showing improved strengths and/or high strains.

Unlike such composite materials (fiber-reinforced cements), which are obtained by the classical cement preparation technologies, the MDF cements containing fibers, object of the present invention, have the peculiarity to be prepared by high shearing stress mixing technologies (calendering for instance) which modify in a substantial way their microstructure.

The introduction of fibers in MDF materials can not in any case be inferred from the knowledge of fiber-reinforced cement materials without considering the problems caused by the particular preparation technology of these materials.

Moreover the characteristic of these materials which must be macrodefect free prevents a simple forecast of the physical mechanical characteristics of the end product since the fibers may introduce macroscopic defects in the material itself.

In the present invention the above defined pseudo-ductile behaviour is obtained by making use of the pull out mechanism of fibers having particular geometrical characteristics. Therefore object of the present invention is a cement composition of MDF kind, comprising an hydraulic cement, water, a soluble (or dispersable) in water polymer and 3D randomized alkali resistant discontinuous fibers, and other additives such as for instance glycerol, said composition being characterized in that it is homogenized by high shearing stress mixing techniques and in that the discontinuous fibers after the homogenization preserve a L/Ed aspect ratio ranging from 50 to 700.

Another object of the present invention concerns a process to produce a cement composition including 3D randomized alkali resistant discontinuous fibers having a L/Ed aspect ratio ranging from 50 to 700 comprising a mixture homogenization able to produce the above defined composition by the use of high shearing stress mixing techniques.

A further object of the present invention concerns a hardened MDF cement composition characterized to have pseudo-ductile characteristics.

The fibers, which are one of the aspects characterizing the invention, may change either by chemical nature or by geometry and thus influence the final characteristics of the product. The fibers usable according to the present invention may be natural or artificial, inorganic or organic.

However it is necessary that the fibers are of "alkali resistant" kind. By this expression we mean that the fibers exposed to an alkaline environment (pH 12.8) at 80 °C for 3000 hours in a cement slurry keep at least the 80% of their mechanical characteristics with reference to the not exposed fibers.

The fibers preferred for the present invention are organic artificial fibers such as polyethylene (PE), polypropylene (even fibrillated) (PP) and polyvinylalcohol (PVA) fibers.

By "discontinuous fibers" we mean that the fibers are obtained by cutting of continuous fibers defining as continuous fibers the fibers having an infinite aspect ratio (L/Ed) at their formation; while by the expressions "3D randomized" we mean that the fibers are uniformly dispersed, all together, inside the matrix. The estimation of the aspect ratio (L/Ed) is an essential element for the present invention.

By this expression in the claims and in the description we mean a dimensionless number obtained dividing the fiber length (L) by its equivalent diameter (Ed).

In particular by the term equivalent diameter we mean the fiber diameter when this has a circular section or the quantity$\sqrt{\frac{\text{4A}}{\text{π}}}$ where A is the area of the fiber cross section when this is not circular.

In order that the fibers may be effectively used in the preparation of the product of the invention it is indispensable that the aspect ratio vary within certain limits as a result of the homogenization of the composite. The fibers after homogenization must preserve an aspect ratio L/Ed ranging from 50 to 700, preferably from 50 to 400.

Particularly appreciated are the fibers maintaining an aspect ratio between 50 and 200.

Pith a ratio lower than 50 the fibers do not work in any way to increase the material impact strength while, with values greater than 700, the dispersability is so low that the material does not acquire particular toughening properties. Moreover with a so high aspect ratio it is extremely difficult to obtain a sufficient dispersability. In order to have a qualitative indication about how the aspect ratio and therefore the dispersion influence the manufacture characteristics it is sufficient to consider that lowering the aspect ratio the dispersion improves but the reinforcing effect decreases. On the other hand, if the aspect ratio is increased the reinforcement properties increase until the homogenization is reduced in such a way as to lower the reinforcement efficacy too.

The fibers to be used in the invention therefore must keep essentially unalterated their aspect ratio or at least must not show after homogenization an aspect ratio lower than 50. The carbon fibers for instance after high shearing stress homogenization for 5 minutes show an aspect ratio lower than 50 and can not therefore be used for the purposes of the present invention.

The quantity of fibers to be used is not a binding characteristic of the invention and in any case it depends on the fibers and matrix characteristics; generally the fibers are added in a quantity ranging from 0.5 to 20% by volume, preferably from 3 to 12% . The best results in toughening terms have been obtained with 9% by volume percentages.

It is also possible to have composite systems having cement matrix comprising two or more different kinds of discontinuous fibers. For instance it has been shown that polyvinyl alcohol fibers and fibrillated polypropylene fibers are able to increase in a significant way the fracture energy of the MDF composite.

A further aspect of the present invention concerns the introduction of one or more kinds of discontinuous fibers in presence of polymeric nets such as polyvinyl alcohol or polypropylene nets. Such an introduction does not modify the toughening characteristics and the fracture energy of the MDF composite.

This fact is surprising enough as the introduction of nets necessarily also involves the introduction of defects in the cement matrix.

Any kind of polymeric net known in the art can be used but particularly remarkable results have been obtained by PVA Kuraray ^{R} VH1313 or VK0707 nets having respectively 8x8 cm and 15x15 cm meshes and by PP Sochital ^{R} nets having 4x5 cm meshes.

The nets are inserted between two layers of fiber-reinforced MDF cement paste.

For instance, after a first layer of MDF paste having a thickness of 3 mm have been inserted the nets that later have been covered by a second layer having a thickness equal to 5 mm; in this case, after pressure forming for 10 minutes at a pressure equal to 100 bar and at 80° C, has been obtained a single MDF specimen fiber-reinforced by nets having a thickness about equal to 5 mm. Any kind of hydraulic cement can be used in the cement materials of the invention.

By the term "hydraulic cement" we mean any material setting and hardening by water addition, and that consequently sets and hardens in presence of water.

The hydraulic cement may be a silicate based cement (siliceous) for instance Portland cement. Or it can be an aluminate based cement (aluminous), for instance a calcium aluminate based cement, or a mixture cement such as a pozzolan.

It is also possible to use mixtures of two or more different hydraulic cements. In a preferred realization of the invention aluminous kind cements are used; particularly aluminous Secar ^{R} 50 and 77 cement and Ciment Fondu ^{R} (Lafarge). In a further preferred realization of the invention Portland ITALCEMENTI ^{R} cement is used.

Any aggregate, the possibly fly ashes and the additives to prepare the mixtures known in the art may be used in the cement material of the invention.

Practically every common cement reported in the Italian UNI ENV 197,1 standard and commercially available can be used in the cement compositions of the invention as such. The cement composition of the invention must necessarily comprise an organic polymer soluble or dispersable in water. The polymer is used in order to give the cement mixture the necessary characteristic mouldability of this kind of cement and to improve its mechanical characteristics.

As far as the present invention is concerned there is no limit to the kind of soluble or dispersable in water polymers which can be used. Examples of soluble or dispersable in water polymers which can be suitably used are:
- alkyl and hydroxyalkyl cellulose ethers (methylcellulose, hydroxyethylcellulose, methylhydroxy ethyl cellulose, ethylhydroxyethylcellulose, propylcellulose, hydroxypropylmethylcellulose, hydroxybutylmethylcellulose)
- acrylamide or polyacrylamide polymers (polyacrylamide, polymethacrylamide, acrylamide/methacrylamide copolymer);
   or even vinylacetate hydrolizable polymers or copolymers particularly polyvinylacetate; polyvinyl alcohol and its polymers or copolymers
   or some more,
- polyalkylene oxide derivatives (polyalkylene glycols having molecular weight above 10.000)
- polyalkoxy-derivatives of alcohols, phenols.

Every soluble or dispersable in H₂ O polymers reported in the European Patent No. 280971 can be used in the present invention.

The particularly, preferred polymer is the polyvinyl alcohol in particular that having fine granulometry, for instance the Gohsenol ^{R} KH 17S.

Examples of cement matrices which can be used for the preparation of the MDF pseudo tenacious manufactures of the invention are those described in the following European Patents:
332388, 21682, 158471, 114518, 115137, 55035, 38126, 30408 and 21681.

The polymeric content in the cement mixture may range from 0.1 to 20% by weight with respect to the hydraulic cement amount, preferably from 0.3 and 10% by weight. The water amount, even though it can change in function of the different kind of polymer, is preferably not more than 30% by weight on the hydraulic cement amount. Greater water amounts may quickly depress the mechanical characteristics of the final material.

The mixtures for the MDF cement preparation of the invention have been done considering the additional water requirement necessary in order to be able to process a mixture containing reasonable fiber volumes. In fact after some preliminary tests to verify the mixtures workability it has been observed how the fibers introduction implies a certain loss in workability provided that the water amount is kept constant as from standard formulation.

Then we agreed to choose a formulation different from that normally used, either for the MDF Portland cement or for the aluminous one, owing to the fact that if it is true that an increase in the water amount cf the mixture yields to the achievement of MDF cements having lower mechanical properties (flexural strength ^{~} 100 MPa if the aluminous matrix is used) it is also true that this allows the process of mixtures of MDF cement plus fibers with high volumes of the latter (to the 12% by volume). Therefore a compromise has been reached between the added water amount and the introduced fibers volume and such factors have been kept constant in order to be able to compare among them the different mixtures reinforced by different fibers.

Such preparations with greater water additions have been done with a principally exemplificative aim in order to magnify the differences among the different kinds of fiber; from an industrial point of view it is preferred to decrease the workability increasing the final mechanical resistances (230 MPa) adopting water and polymer amounts as described above.

It is essential, for the process of the invention, that the compositions based on not hardened cement be homogeneous. When using the term "homogeneous" we mean that the ingredients of the composition, essentially formed by hydraulic cement, soluble dispersable in water polymer, water and fibers, and possibly other additives, have been subjected to dispersion processes such as to make the final material to have a uniform density. Processes particularly suitable to produce such a condition in the not hardened composition comprise extrusion and calendering.

Preferably, the ingredients are at first mixed and then subjected to a first high shearing stress mixing phase and to deaeration processes, by which a rough heterogeneity is removed and a pulp is produced.

This material then undergoes a second compaction and dispersion phase in order to obtain the homogenization requested in the not hardened cement composition.

Preferably, this second phase comprises extrusion or calendering processes.

The ingredients of the present invention, however, may be subjected to whatever suitable condition producing a homogeneous composition provided that the homogenization occurs by high shearing stress processing techniques.

The not hardened, homogeneous, cement composition of the present invention may be modelled in the shape of semimanufactured products and, subsequently, can be hardened and it can be dried to obtain the finished articles. The forming operation may be carried out during or immediately after the homogenization, for instance by extrusion or by calendering. Here after some illustrative examples of the present invention are reported which must not be considered limitative of the invention itself.

### EXAMPLE 1

A mixture has been prepared with the following components:
1000 g of Secar 71 aluminous cement
140 g of water and glycerol mixture (0.12%)
70 g of polyvinylalcohol (PVA) Gohsenol

The components have been mixed in a Hobart crown wheel mixer for total 5 min.

The mixture obtained after the processing in the crown wheel mixer has been let for some minutes (2-3) through the rolls of a high shearing stress mixer (cylinder size: diameter 150 mm x 300 mm, velocity of the front roll 12 rpm, velocity of the rear roll 10 rpm), until the polymer, the cement and the water become an homogeneous paste.

Then 78 g of PVA RF 350 12 mm (9% vol on the matrix) discontinuous fibers have been added homogenizing to a total dispersion (5 min). The PVA fibers dispersed homogeneously in the cement matrix to the extent that presences of lumps or little tufts of fibers capable in case of creating some weakness points in the finished material were not noticed.

The fibers were not subjected to size variations after the insertion phase and then the aspect ratio was kept constant (L/Ed = 60).

At the end of the operation a paste having a thickness about equal to 7-8 mm has been obtained in order to obtain in the subsequent pressing phase a desired thickness equal to 5 mm.

Acting in such conditions one is able to obtain a complete homogenization of the fibers inside the cement mixture having performed a dispersion of the fibers all together. The so obtained paste underwent hot pressing (80 °C for 10 min at a pressure equal to 100 bar (paste sizes about 200 x 300 mm).

Some 5 mm pieces have been pressed in order that the final thickness of the composite would be constant for any slab produced with the different fibers.

The slabs coming out of the press were kept for 24 hours in a stove at a constant temperature (80 °C) in order to complete the hardening.

Once the slabs completed the curing cycle (press + stove), some specimens having fixed sizes in order to subsequently submit them to the mechanical tests have been obtained, by cuts with diamond blade circular saw.

### EXAMPLE 2

A mixture has been prepared with the following components:
1000 g of Secar 71 aluminous cement
140 g of water and glycerol mixture (0.12%)
70 g of polyvinylalcohol (PVA) Gohsenol

The components have been mixed in a Hobart crown wheel mixer for total 5 min.

The mixture obtained after the processing in the crown wheel mixer has been let to pass for some minutes (2-3) through the rolls of a high shearing stress mixer (cylinder size: diameter 150 mm x 300 mm), obtaining an homogeneous paste.

Then 55 g of fibrillated polypropylene Sochital ^{R} 10 mm (9% vol on the matrix) discontinuous fibers were added homogenizing to a total dispersion (8 min).

The fibers were not subjected to size changes after the insertion phase and then the aspect ratio was kept constant (L/Ed = 160). The rolls spin velocity in this case was equal to 20 rpm for the front roll and 16 rpm for the rear one. After 3 minutes of processing the rolls spin velocities were set to 12 and 10 rpm respectively.

The pulp so obtained underwent a processing substantially as described in the Example 1.

### EXAMPLE 3 (by comparison)

A mixture has been prepared with the following components:
1000 g of Secar 71 aluminous cement
140 g of water and glycerol mixture (0.12%)
70 g of polyvinylalcohol (PVA) Gohsenol

The components have been mixed in a Hobart crown wheel mixer for total 5 min.

The mixture obtained after the processing in the crown wheel mixer has been let to pass for some minutes (2-3) through the rolls of a high shearing stress mixer as in the previous examples. 96 g of carbon discontinuous fibers of RK 10 6mm kind (9% by vol on the matrix) have been added. The carbon fibers in all the used kinds of fibers have been the ones which mixed best.

After the calendering phase however the fibers from the initial 6 mm in length broke in many fragments having length equal to 100-200 µm (L/Ed = 25). The remaining operations were carried out analogously in the Example 1.

### EXAMPLE 4 (by comparison)

A mixture has been prepared following substantially what is described in the Example 1 but only glass fibers CEM FIL 2 (6 mm) were added. After the calendering phase the fibers aspect ratio (L/Ed) was equal to 14.

### EXAMPLE 5 (standard)

In order to compare the various samples of the previous examples the process described in the Example 1 has been repeated without addition of any kind of fibers.

### EXAMPLE 6

The specimens of the previous Examples were submitted to two kinds of mechanical tests to estimate the impact strength, ductility and strength characteristics of the hardened composites.

The cut specimens has been performed using a diamond blade. The sizes are those reported according to the ASTM 399-83 standard, specification for the determination of the metallic materials impact strength (there is no specific standard for the MDF cement): length 60 mm, width 10 mm and thickness 5 mm.

The mechanical tests performed were of two kinds: flexural test and impact tests.

The flexure was a so-called single-edge notched bending (SEN (B)) test with three points with specimen sizes fixed according to the before cited ASTM 399-83 standard. The test served for the determination of the principal mechanical characteristics of the composite, modulus of elasticity (E), impact strength (R), tenacity (σ), fracture energy (E_{T}). The machine used to carry out such measures was an Instron 4302, having a 10 KS load cell, with test velocity equal to 1 mm/min and a span equal to 50 mm.

The impact test has been carried out in order to estimate the main resistance properties of such materials to a destructive collision: estimation of the fracture total energy and of the material resilience. The machine used to perform such kinds of tests was a Charpy pendulum with a 4.3 kg striking hammer, with a pendulum inclination angle initially equal to 45% and with a pendulum velocity equal to 1.21 m/s. The characteristics measured by such a device have been mainly the breaking total energy and the material resilience.

The Table 1 reports the results of such tests.

**TABLE 1**

| Ex. | Specimen | Breaking res. σ (MPa) | Elast. modulus E(GPa) | Impact strength mJ/m3 | Fracture energy kJ/m2 | Charpy Resilience kJ/m2 |
|---|---|---|---|---|---|---|
| 5 | Standard | 126 | 28 | 33 | 1.65 | 5.6 |
| 1 | PVA | 94 | 25.5 | 115 | 5.70 | 11.4 |
| 2 | PP | 61 | 22 | 72 | 8.56 | 7.37 |
| 3 | Carbon | 114 | 24 | 32 | 1.60 | 4.7 |
| 4 | Glass | 95 | 24 | 22 | 1.11 | 3.7 |

As it is possible to notice from the Table, even if the materials resistances lower with fibers with respect to the standard it is observed that either the tenacity or the fracture energy remarkably increase for the specimens with polyvinylalcohol (PVA) and polypropylene fibers while for the comparison samples the resistance lowering is not compensated by an increase in the fracture energy.

Also from the impact test (Charpy pendulum) the same indications are obtained.

### EXAMPLE 7

A mixture has been prepared as described in the Example 1. Only 36 g of PVA RF 350 12 mm (54% by vol on the matrix) discontinuous fibers and 24 g of fibrillated PP 10 mm (45% by vol on the matrix) discontinuous fibers have been added.

The fibers kept a constant L/Ed ratio after the insertion phase. The paste then has been treated as described in the Example 1.

The mechanical kind tests have been carried out according what is described in the Example 6. The results have been reported in the Table 2.

**TABLE 2**

| Specimen | Elast. modulus E(GPa) | Impact strength mJ/m3 | Fracture energy kJ/m2 | Charpy Resilience kJ/m2 |
|---|---|---|---|---|
| STD (ex. 5) | 28 | 33 | 1.65 | 5.6 |
| PVA+PP | 22.6 | 194 | 9.70 | 6.9 |

### EXAMPLE 8

A mixture has been prepared as described in the Example 1. 73 g of PVA RF 350 12 mm (9% by vol on the mixture) discontinuous fibers and 1 PVA Kuraray VH1313 (9x9 meshes) net having a weight equal to 78 g/m² (2% by vol on the mixture) have been added.

The net has been inserted between two layers of fiber reinforced material before the pressing and curing phase. The subsequent preparation conditions are analogous to those of the Example 1 while the mechanical kind tests have been carried out according what is described in the Example 6.

The results are reported in the Table 3.

**TABLE 3**

| Specimen | Elast. modulus E(GPa) | Impact strength mJ/m3 | Fracture energy kJ/m2 | Resilience Charpy kJ/m2 |
|---|---|---|---|---|
| STD (ex. 5) | 28 | 33 | 1.65 | 5.6 |
| PVA (ex. 1) | 25.5 | 115 | 5.70 | 11.4 |
| PVA+net | 26.0 | 86 | 4.31 | 11.6 |

## Claims

1. Cement composition of kind MDF (macro defect free) comprising an hydraulic cement, water, a soluble or dispersable in water polymer and one or more kinds of 3D randomized alkali resistant discontinuous fibers, homogenized by high shearing stress mixing techniques, characterized in that the fibers after homogenization keep an aspect ratio L/Ed (equivalent diameter of the fibers) ranging from 50 to 700.

2. Composition as claimed in claim 1, characterized in that it includes polymeric nets.

3. Composition as claimed in claims 1 and 2, wherein said fibers after homogenization keep an aspect ratio ranging from 50 to 400.

4. Composition as claimed in claims 1 and 2, wherein said fibers after homogenization keep an aspect ratio ranging from 50 to 200.

5. Composition as claimed in claims from 1 to 4, wherein said fibers are organic artificial fibers such as polyethylene, polypropylene, even fibrillated, and polyvinylalcohol fibers.

6. Composition as claimed in claims from 1 to 5, wherein said fibers are in an amount ranging from 0.5 to 20% by volume, preferably from 3 to 12%.

7. Composition as claimed in claims from 1 to 6, wherein said hydraulic cement is a cement selected from those indicated in the Italian UNI 197.1 standard or an aluminous kind cement.

8. Composition as claimed in claims from 1 to 7, wherein said soluble or dispersable in water polymer is selected from alkyl and hydroxylalkyl cellulose ethers, acrylamide or polyacrylamide polymers, vinylacetate hydrolizable polymers or copolymers, polyvinylalcohol and its polymers and copolymers, polyalkylene oxide derivatives and polyalkoxy-derivatives of alcohols, preferably polyvinylalcohol.

9. Composition as claimed in claims from 1 to 8, wherein the content in polymer may range from 0.1 to 20% by weight with respect to the hydraulic cement amount, preferably from 0.3 to 10% by weight.

10. Composition as claimed in claims from 2 to 9, wherein said polymeric nets are selected from polyvinylalcohol nets and fibrillated polypropylene nets.

11. Composition as claimed in claims from 1 to 10, characterized in that, once hardened, it has pseudo ductile characteristics.

12. Process for the preparation of a cement composition of MDF kind having pseudo-ductile characteristics, characterized in that a mixture comprising an hydraulic cement, water, a soluble or dispersable in water polymer and one or more kinds of 3D randomized alkali resistant discontinuous fibers is at first submitted to a homogenization phase by high shearing stress mixing techniques in which said fibers keep a L/Ed aspect ratio ranging from 50 to 700 and later to a hardening phase after optional insertion of polymeric nets.

13. Use of one or more kinds of discontinuous fibers in a cement composition of MDF kind, said fibers being 3D randomized, alkali resistant and such to keep a L/Ed aspect ratio ranging form 50 to 700 after homogenization of said cement composition by high shearing stress mixing techniques, and optionally of polymeric nets, for the preparation of pseudo-ductile MDF cement materials.

## Patentansprüche

1. Zementzusammensetzung des MDF-Typs (makrodefektfrei) umfassend einen hydraulischen Zement, Wasser, ein in Wasser lösliches oder dispergierbares Polymer und eine oder mehrere Arten von räumlich zufällig verteilten, Alkali-resistenten, diskontinuierlichen Fasern, homogenisiert durch Mischtechniken mit starker Scherbeanspruchung, dadurch gekennzeichnet, daß die Fasern nach dem Homogenisieren ein Längenverhältnis L/Ed (äquivalenter Durchmesser der Fasern) von 50 bis 700 bewahren.

2. Zusammensetzung nach Anspruch 1, dadurch gekennzeichnet, daß sie polymere Netze umfaßt.

3. Zusammensetzung nach Anspruch 1 und 2, wobei die Fasern nach dem Homogenisieren ein Längenverhältnis von 50 bis 400 bewahren.

4. Zusammensetzung nach Anspruch 1 und 2, wobei die Fasern nach dem Homogenisieren ein Längenverhältnis von 50 bis 200 bewahren.

5. Zusammensetzung nach Anspruch 1 bis 4, wobei die Fasern organische Chemiefasern wie Polyethylen-, Polypropylen- mit gleichmäßig vorgebildeter Faserstruktur und Polyvinylalkoholfasern sind.

6. Zusammensetzung nach Anspruch 1 bis 5, wobei die Fasern in einer Menge von 0,5 bis 20 Volumenprozent, vorzugsweise von 3 bis 12 Volumenprozent, vorliegen.

7. Zusammensetzung nach Anspruch 1 bis 6, wobei der hydraulische Zement ein Zement ist, ausgewählt aus jenen im italienischen Standard UNI 197.1 angegebenen oder ein Tonerdezement ist.

8. Zusammensetzung nach Anspruch 1 bis 7, wobei das in Wasser lösliche oder dispergierbare Polymer aus Alkyl- und Hydroxyalkylcelluloseethern, Acrylamid- oder Polyacrylamidpolymeren, hydrolisierbaren Vinylacetatpolymeren oder -copolymeren, Polyvinylalkohol und seinen Polymeren und Copolymeren, Polyalkylenoxid-Derivaten und Polyalkoxy-Derivaten von Alkoholen, vorzugsweise Polyvinylalkohol, ausgewählt ist.

9. Zusammensetzung nach Anspruch 1 bis 8, wobei der Polymergehalt bezogen auf die Menge an hydraulischem Zement von 0,1 bis 20 Gewichtsprozent betragen kann, vorzugsweise von 0,3 bis 10 Gewichtsprozent.

10. Zusammensetzung nach Anspruch 2 bis 9, wobei die polymeren Netze ausgewählt werden unter Polyvinylalkohol-Netzen und Netzen aus Polypropylen mit vorgebildeter Faserstruktur.

11. Zusammensetzung nach Anspruch 1 bis 10, dadurch gekennzeichnet, daß sie nach dem Erhärten pseudo-duktile Eigenschaften hat.

12. Verfahren zur Herstellung einer Zementzusammensetzung des MDF-Typs mit pseudo-duktilen Eigenschaften, dadurch gekennzeichnet, daß ein Gemisch, umfassend einen hydraulischen Zement, Wasser, ein in Wasser lösliches oder dispergierbares Polymer und eine oder mehrere Arten von räumlich zufällig verteilten, Alkali-resistenten, diskontinuierlichen Fasern zunächst einer Homogenisierungsphase durch Mischtechniken mit starker Scherbeanspruchung unterworfen wird, in welcher die Fasern ein L/Ed-Längenverhältnis von 50 bis 700 bewahren und später einer Aushärtungsphase nach optionaler Einbringung eines polymeren Netzes.

13. Verwendung von einer oder mehreren Arten von diskontinuierlichen Fasern in einer Zementzusammensetzung des MDF-Typs, wobei die Fasern räumlich zufällig verteilt, Alkali-resistent und so beschaffen sind, daß sie nach einer Homogenisierung der Zementzusammensetzung durch Mischtechniken mit starker Scherbeanspruchung ein L/Ed-Längenverhältnis von 50 bis 700 bewahren, und gegebenenfalls von polymeren Netzen zur Herstellung von pseudo-duktilen MDF-Zementmaterialien.

## Revendications

1. Composition de ciment de type MDF (exempt de macro-défaut) comprenant un ciment hydraulique, de l'eau, un polymère soluble ou dispersable dans l'eau et un ou plusieurs types de fibres discontinues aléatoires en 3D et résistantes aux bases, homogénéisée par des techniques de mélange sous contraintes de cisaillement élevées, caractérisée en ce que les fibres après homogénéisation conservent un rapport d'aspect L/Ed (diamètre équivalent des fibres) dans la gamme de 50 à 700.

2. Composition selon la revendication 1, caractérisée en ce qu'elle inclut des réseaux polymères.

3. Composition selon les revendications 1 et 2, dans laquelle lesdites fibres après homogénéisation conservent un rapport d'aspect dans la gamme de 50 à 400.

4. Composition selon les revendications 1 et 2, dans laquelle lesdites fibres après homogénéisation conservent un rapport d'aspect dans la gamme de 50 à 200.

5. Composition selon les revendications 1 à 4, dans laquelle lesdites fibres sont des fibres artificielles organiques telles que des fibres de polyéthylène, de polypropylène, même fibrillées et de poly(alcool vinylique).

6. Composition selon les revendications 1 à 5, dans laquelle lesdites fibres sont en une quantité dans la gamme de 0,5 à 20% en volume, de préférence, de 3 à 12%.

7. Composition selon les revendications 1 à 6, dans laquelle ledit ciment hydraulique est un ciment choisi parmi ceux indiqués selon la norme italienne UNI 197.1 ou un ciment de type alumineux.

8. Composition selon les revendications 1 à 7, dans laquelle ledit polymère soluble ou dispersable dans l'eau est choisi parmi les éthers alkyl- et hydroxyalkylcellulosiques, les polymères acrylamide ou polyacrylamide, les polymères ou copolymères hydrolysables d'acétate de vinyle, le poly(alcool vinylique) et ses polymères et copolymères, les dérivés de poly(oxyde d'alkylène) et les dérivés polyalcoxylés d'alcools, de préférence le poly(alcool vinylique).

9. Composition selon les revendications 1 à 8, dans laquelle la teneur en polymère peut être dans la gamme de 0,1 à 20% en poids par rapport à la quantité de ciment hydraulique, de préférence de 0,3 à 10% en poids.

10. Composition selon les revendications 2 à 9, dans laquelle lesdits réseaux polymères sont choisis parmi les réseaux de poly(alcool vinylique) et les réseaux de polypropylène fibrillés.

11. Composition selon les revendications 1 à 10, caractérisée en ce que, une fois durcie, elle possède des caractéristiques pseudo-ductiles.

12. Procédé pour la préparation d'une composition de ciment de type MDF ayant des caractéristiques pseudo-ductiles, caractérisé en ce qu'un mélange comprenant un ciment hydraulique, de l'eau, un polymère soluble ou dispersable dans l'eau et un ou plusieurs types de fibres discontinues résistantes aux bases aléatoires en 3D est d'abord soumis à une phase d'homogénéisation par des techniques de mélange sous contraintes de cisaillement élevées dans lesquelles lesdites fibres conservent un rapport d'aspect L/Ed dans la gamme de 50 à 700 et plus tard à une phase de durcissement après l'insertion éventuelle de réseaux polymères.

13. Utilisation d'un ou plusieurs types de fibres discontinues dans une composition de ciment de type MDF, lesdites fibres étant résistantes aux bases, aléatoires en 3D et telles pour conserver un rapport d'aspect L/Ed dans la gamme de 50 à 700 après homogénéisation de ladite composition de ciment par des techniques de mélange sous contraintes de cisaillement élevées, et éventuellement de réseaux polymères, pour la préparation de matériaux de ciment MDF pseudo-ductiles.
